# EUROPEAN PATENT APPLICATION

(11) **EP 2 767 386 A1**
(43) Date of publication of application: **20.08.2014**
(21) Application number: 13382044.9
(22) Date of filing: 14.02.2013
(51) Int. Cl.: B29C 70/30, B29C 51/12

(54) **Reinforcement system for thermoplastic materials and product thus obtained**

(71) Applicant: Roca Sanitario, S. A., 08029 Barcelona (ES)
(72) Inventor: Quintana Bartual, Alberto, 08029 BARCELONA (ES); Borrós Gómez, Salvador, 08017 BARCELONA (ES); Agulló Chaler, Nuria, 08017 BARCELONA (ES)
(74) Representative: Oficina Ponti, SLP

(57) **Abstract**

The reinforcement system is based on the combination of water based resin, a curing agent and glass fibres, excluding for this combination polyester resins and polyurethane resins.

The present invention also relates to a process for manufacturing products of thermoforming plastic material for acrylic sanitary use, wherein a reinforcement step of said product is carried out with said reinforcement system.

The reinforcement system of the invention finds particular application in the sanitary industry or acrylic sanitary products.

## Description

### Field of the invention

The present invention relates to a reinforcement system for thermoplastic or thermoforming materials for acrylic sanitary ware products. In particular, the invention relates to a system providing resistance to thermoplastic materials subjected to thermoforming.

The present invention also relates to the product directly obtained after the application of said reinforcement system. Said finished product consists of the thermoformed and reinforced thermoplastic material.

### Background of the invention

Several reinforcement systems for thermoplastic or thermoforming materials are well known in the art.

Thermoforming is a manufacturing process of thermoplastic sheets or films. Specifically, the thermoplastic sheet or film takes the shape of the mold after the application of temperature to obtain the thermoformed product or piece. The sheet or film is heated to the softening temperature, then it is shaped on a mold and finally it is cooled. A thermoforming machine may only work under vacuum or under vacuum in combination with pressurized air in the forming process.

The most known reinforcement systems for thermoforming plastic materials are, on the one hand, the reinforcement by applying an unsaturated polyester resin (UPR) layer with curing agents together with glass fibres and, on the other hand, the reinforcement by applying a polyurethane foam layer.

Polyester resins as reinforcing products in thermoplastic products or pieces are resins with relatively reduced costs which have additionally good mechanical properties. However, such resins have two important drawbacks.

During the application process of polyester resins and the subsequent curing volatile organic compounds (VOCs) are delivered, vapour emissions not being desirable. The effects of these vapours on health have not been elucidated yet, but it has been proved that cause eye irritation and sickness. There are also reports suggesting that they can be cancerous products, although this is an aspect which up to date has not been clinically proved. In addition, due to the discomfort caused by these vapours, their emission is being gradually limited by environmental laws in all industrialized countries. Therefore, there is the need for the provision of gas depuration systems, such as styrene gas among others, before theses gases are delivered to the atmosphere.

Both unsaturated polyester resins (UPR) and curing agents used for accelerating the curing process are highly combustible products. It is well known that said curing agents are mostly organic peroxides and, therefore, products which are specially dangerous due to its high inflammability and explosion ease. These circumstances force the operators to maximize the safety measures while handling of these products and to provide expensive detection and fire extinguisher equipments with the resulting required maintenance costs.

There are other reinforcement systems for thermoforming plastic materials, although not very used, based on coating said thermoplastic materials with a polyurethane foam layer.

Nevertheless, polyurethane foams have the drawback that they are decomposed by UV exposition. In addition, when these foams burn the emission of toxic gases containing dangerous chemical compounds for the environment is produced. On the other hand, polyurethane foams have a considerably higher cost than those of UPR resins, on which cause manufacturers are not often using this reinforcement system.

In the light of the drawbacks found in the reinforcement systems for plastic materials in the art, the present inventors provide a reinforcement system overcoming said drawbacks in the known reinforcement systems additionally providing other advantages which will be apparent from the following description.

### Summary of the invention

A first object of the present invention is to overcome the above mentioned drawbacks by developing a novel reinforcement system for thermoforming plastic materials comprising the reinforcement of said thermoplastic materials with water-based resins, preferably with epoxy resin, and glass fibres. With the system provided herein the use of both polyester resins and polyurethane foams is avoided.

Therefore, the present invention relates to a reinforcement system for thermoplastic or thermoforming materials which completely changes the line of work used up to date in the industry for the manufacture of thermoformed plastic products or pieces requiring a local reinforcement.

Another object of the present invention is to provide a process for the manufacture of sanitary products using the reinforcement system according to the first object of the present invention.

Still another object of the present invention is the product directly obtained which has been reinforced with the system according to the first aspect of the present invention. The present invention relates to the field of sanitary products which have been reinforced according to the first aspect of the present invention. The manufactured sanitary ware product is made from a thermoplastic thermoformed material reinforced with epoxy resin and glass fibre. In another embodiment, the manufactured sanitary ware product is made from a thermoplastic material with epoxy resin and glass fibres, and a wood sheet or plate. The obtained sanitary ware product may have any shape or design. In a preferred embodiment of the invention, said sanitary ware product is a bath. Preferably, the areas to be reinforced will be those areas of the sanitary product undergoing higher pressures such as, for example, the base of a bath or shower tray.

It is also in the scope of the present invention the use of the reinforcement system for a thermoforming plastic material in the sanitary ware industry.

### Definitions

In the present invention "thermoplastic or thermoforming materials" means a thermoplastic material, preferably from synthetic origin, able to be deformed. Said thermoplastic material has the ability of being deformed with temperature and of recovering the initial properties after cooling. A thermoplastic material at softening temperature is plastic or deformable, melts when heated at a higher temperature and is hardened to a vitreous state when is sufficiently cooled. Most of thermoplastics are polymers of high molecular weight having chains bonded by week Van der Waals forces (polyethylene), strong dipole-dipole interactions and hydrogen bond, or even stacked aromatic rings (polystyrene). Most typical are: polyethylene (PE), polypropylene (PP), polystyrene (PS), poly(methylmethacrylate) (PMMA), polyvinyl chloride (PVC), poly(ethylene terephthalate) (PET), teflon (or polytetrafluoroethylene, PTFE) and nylon (a type of polyamide). Among these poly(methylmethacrylate) (PMMA) is preferred.

In the present invention, "water base resin" means any polymeric material, preferably a reactive material, which uses mainly water as a vehicle. An example of such water based resin is the epoxy resin.

In the present invention, "curing agent" or "hardening agent" means a chemical compound reacting with a water based resin and causing the polymerisation or crosslinking of the resin. Examples of curing agents are: compounds of amines, polythiols, diols and polyols.

### Brief description of the drawings

For a better understanding of what has been disclosed, figures are included, where, schematically and only by way of non limitative example, represents a practical case of the invention.

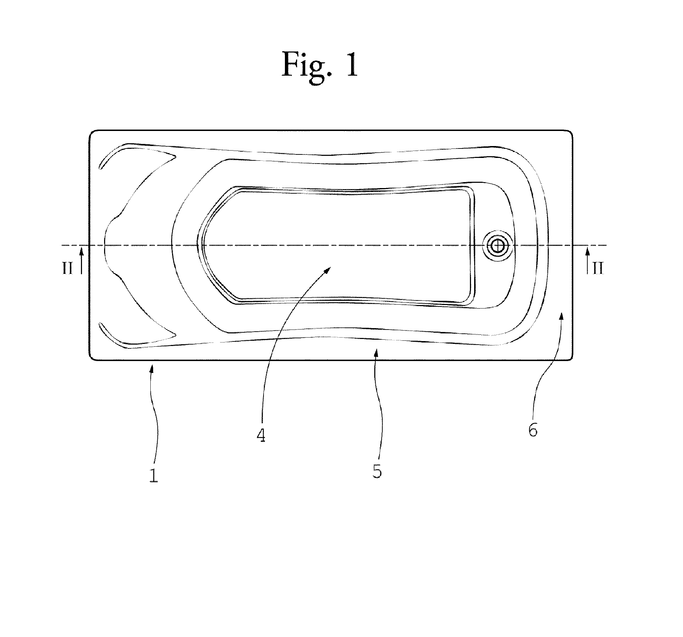

Figure 1 is a plan view of a bath shaped from a sheet of a thermoplastic material showing the external face of the wall sheet 1 forming an internal cavity 4, and frontal and rear support flaps 6 and side support flap 5.
Figure 2 shows a longitudinal section of figure 1 by axis II-II. This figure 2 shows the length of the bath and of the reinforcement with wood arranged on the base.
Figure 3 is an enlarged view of section II-II of figure 2 which shows the detail X from the base of the bath in the area including the bath drain. This figure 3 shows the thickness of the wall sheet 1, as well as the thickness of the reinforcement with wood 2 and the layer of resin and glass fibre 3 coating said wood reinforcement 2.
Figure 4 is another enlarged view of section II-II of figure 2 showing the detail Y of the support flap 6 including the wall sheet 1 coated with resin and glass fibre 3 in its inner face.

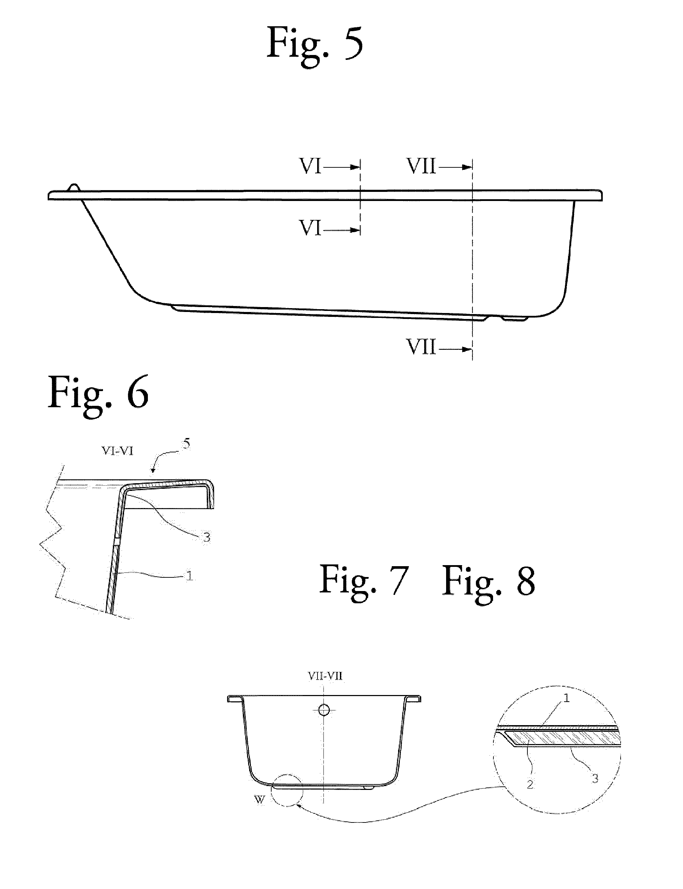

Figure 5 is a side view of the bath of figure 1.
Figure 6 shows a cross-section view VI-VI of figure 5 wherein the configuration of the side support flap 5 of the bath including the wall sheet 1 coated with resin and glass fibres 3 in its inner face is shown in more detail.
Figure 7 shown a cross-section view VII-VII of figure 5 wherein the width of the bath and the reinforcement of the base of the bath W are shown.
Figure 8 is an enlarged view of the section of figure 7 showing the detail W from the base of the bath. From this detail, the wall 1 of the bath and the layer of reinforcement of resin and glass fibre 3 which surrounds the reinforcement with wood 2 are shown.

### Detailed description of the invention

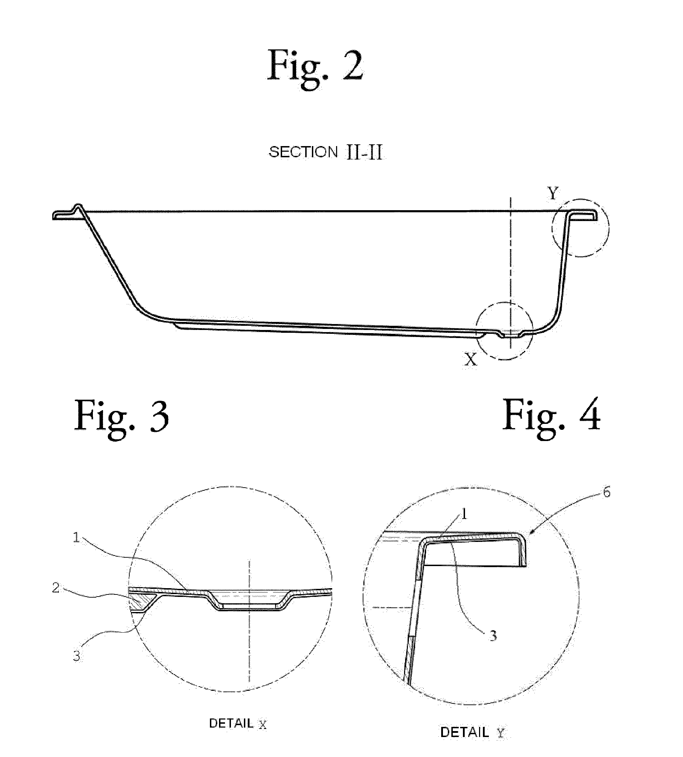

According to the present invention, a reinforcement system for thermoplastic or thermoforming materials characterised in that it comprises a reinforcement based on water based resins, glass fibres and a curing agent for accelerating the curing process of said resins is provided. In addition, said reinforcement system includes a sheet or plate of wood or conglomerate wood in the area of the product intended to have an enhanced resistance. When it is preferred that the wood reinforcement be added, an application with the reinforcement of water based resin and glass fibres will be first performed, then, the wood reinforcement will be placed and finally another reinforcement with water based resin and glass fibres will be again applied so that the wood reinforcement be surrounded by the reinforcement with water based resin and glass fibres, as shown, for example, in detail X in figure 3.

Said water based resin is preferably an epoxy resin and said curing agent is preferably a polyol.

Advantageously, by using water based resins, glass fibres and a curing agent as a reinforcement for a thermoplastic or thermoforming material problems derived from the emission of volatile organic compounds (VOCs) are avoided since the components used in the reinforcement system according to the invention only delivers water. Accordingly, the present invention also solves environmental problems derived from the emission of styrene and acetone in the art.

Also advantageously, with the reinforcement system according to the present invention the dangerousness in factories for making sanitary items using polyester resins is reduced or avoided, in addition to the suppression of possible health problems which could arise after handling said polyester resins. The reinforcement system according to the present invention involves an improvement for the operators since no protection masks are needed and there are no inflammability and explosion problems while handling.

This all leads to a saving in the factories for making sanitary items since there is no need of complex detection systems for harmful gases or fire extinguisher systems or particular care when handling polyester resins.

The present inventors have also found that in addition to the above mentioned advantages, the use of the novel reinforcement system in the sanitary industry provides finished products with similar mechanical properties to those in the art.

In another aspect, the present invention also relates to a process for manufacturing products of thermoplastic or thermoforming material using the reinforcement system disclosed above.

The process for manufacturing products of thermoplastic or thermoforming material using the reinforcement system according to the present invention is completely safe.

Therefore, the process for the manufacture of acrylic sanitary products starting from a thermoplastic material comprises:
a) thermoforming a sheet or plate made of thermoplastic material with the desired design, and is characterised in that, once the material is thermoformed and the product is obtained, the process further comprises:
b) applying in the desired area of the product a quantity of water based resin, glass fibres and a curing agent;
c) compressing the set resin, fibres, and curing agent; and
d) carrying out the curing or drying the resin. Preferably, said curing or drying process takes place at a temperature between 18°C and 40°C.

In said step b), said area can be the whole surface of the shaped product or a part thereof. The application of the water based resin, the curing agent and glass fibres is carried out by using, for example, an air gun. By employing an air gun the glass fibre in portions and a mixture of water based resin and curing agent is concurrently deposited over the area of the product or piece to be reinforced.

Optionally, when an even more resistant reinforcement in the particular area of the product or piece is desired, the process further comprises:
e) placing a flat and solid material of similar size of the area to be reinforced and carrying out on said flat and solid material the above steps b), c) and d). Advantageously, said flat and solid material is a sheet or a plate of wood. See, for example, figure 2 and figure 3, showing in detail X the wood reinforcement 2. Although a reinforcement with wood is preferred, it is apparent for those skilled in the art that wood is a material which can be replaced with an equivalent material making the same function, in other words, to provide the area with a higher resistance. Conglomerate wood is preferred due to its low cost or another material with similar strength properties of a conglomerate wood wall of thickness 1.5 cm

After said step b), it is advantageous performing a compression (step c) by means of, for example, rollers in order to remove or take out the air which could be occluded during the application of the resin and glass fibres and the curing agent.

Then, in said step d) a curing or drying process is carried out by temperature, along with the consequent the evaporation of the solvent. Advantageously, according to the present invention the evaporation of water takes place. The water evaporation causes the hardening of the resin together with glass fibres. During the curing or drying step temperatures comprised between 18°C y 40°C can be applied. Preferably, said drying step is performed with heated air at such temperatures.

The curing agent used will also evaporate during resin curing. The curing or hardening agent used in the present invention can be selected from any curing agent provided that it is not harmful to health or pollutant for the environment. Preferably, the curing agent is a compound of amines, polythiols, diols and polyols, suitable for working with epoxy resins.

Accordingly, the process for manufacturing products of reinforced thermoplastic material with the reinforcement system according to the invention allows to overcome the problems of generation of organic volatile compounds, in particular styrene and acetone, found in the art. In addition, health and safety problems while handling said compounds are also overcome, in particular related to inflammability.

Another advantage of the process of manufacture according to the invention is that the equipment and conveyor belts for the treated products or pieces can be easily cleaned only with water, while up to date the use of solvents such as acetone was needed with the underlying problems caused by said solvent.

The present invention also relates to the obtained product or pieces treated with the reinforcement system disclosed above. Said pieces or finished product are characterized by a surface of thermoplastic material which has been submitted to thermoforming and has been reinforced with a water based resin and glass fibres. Optionally, the finished product also contains a wood reinforcement. In an embodiment of the present invention, said product or piece is a bath, a shower tray, a shower panel, hydromassage columns or any sanitary item made from a sheet or plate of thermoplastic or thermoforming material.

By way of example of a thermoplastic material, poly(methylmethacrylate) (PMMA) properties are included.

| **Properties** | **Assay standard** | **PMMA** |
|---|---|---|
| Density | DIN 53 479 | 1.2 g/cm³ |
| Max. continuous application temperature | | 100°C |
| Rupture elongation | DIN 53 465 | 65% |
| Tensile elastic modulus | DIN 53 457 | 03-10 MPa |
| Impact resistance | DIN 53 453 | 18KJ/m² |
| Dielectric resistance (106 Hz) | DIN 53 483 | 3.4 |

An example of the manufacture of a acrylic sanitary product using the reinforcement system according to the present invention is included below.

### Example 1

A PMMA sheet with the suitable length, width and thickness dimensions for manufacturing a bath was placed on the frame of a thermoforming equipment.

After the PMMA sheet had absorbed enough heat, it was subjected under vacuum in order to form the bath with the desired shape. With this system, baths, shower trays, shower panels or hydromassage columns, among the most common sanitary items, can be manufactured.

The design of the mold in the thermoforming equipment provided the shape of the thermoformed piece.

Once the thermoformed piece is obtained, it was submitted to the reinforcement system by applying the following steps:
1. Epoxy resin layer whose solvent is water. The aqueous compositon of the epoxy resin comprises: epoxy resin with water, additives (such as, dye, shrinkage-reducing agent, filler, etc...) and a hardening agent (curing agent).
2. Glass fibre (also fiberglass);
3. Wood reinforcement on the flat and inner area of the bath and applying again the steps 1 and 2.

On the base of the thermoformed piece glass fibres were applied. The epoxy resin was added until saturation of glass fibres and the surface to be reinforced was suitably coated. The wood reinforcement was placed over the flat area of the bath base. Pressure was applied, preferably using rollers, and it was formed to allow the possible occluded air between layers air to exit. It was allowed to cure or dry, and water was evaporated. While drying the base of the bath, the following reinforcement layer of glass fibres and epoxy resin was placed. A new curing or drying process is then applied in order to evaporate water and cure the resin.

Although a particular embodiment of the present invention has been disclosed and represented, it is apparent that a skilled in the art could introduce variants and modifications or replace the details with other technically equivalents without departing from the protection scope defined by the appended claims.

## Claims

1. A reinforcement system for thermoplastic materials for acrylic sanitary products, **characterised in that** said reinforcement is based on the combination of water based resins, a curing agent for accelerating the curing of said resins, additives and fibre glass, excluding from said combination polyester resins and polyurethane resins.

2. Reinforcement system according to claim 1, wherein said resin in aqueous base is an epoxy resin.

3. Reinforcement system according to claim 1, wherein said curing agent is a polyol.

4. Process for manufacturing products of themoplastic material comprising the following steps:
a) thermoforming a sheet or plate made of thermoplastic material with the desired design, **characterised in that**, once the material is thermoformed to a desired design, the process further comprises:
b) applying in the desired area of the thermoformed material a water based resin, glass fibres and a curing agent in order to carry out the resin polymerization with temperature;
c) compressing resin, fibres, and curing agent, and
d) curing or drying in order the curing of the resin takes place.

5. Process according to claim 4, wherein said curing or drying process of the reinforced product is carried out at a temperature comprised between 18°C and 40°C.

6. Process according to claim 4, wherein said area can be the whole surface of said product or a part thereof.

7. Process according to claim 4, wherein said application of said water based resin, curing agent and glass fibres is carried out by using an air gun which concurrently provides the glass fibre in portions and a mixture of water based resin and curing agent.

8. Process according to claim 4, further comprising:
e) applying a solid and flat material with similar dimensions to those of the area to be reinforced and again carrying out steps b), c) and d) on said solid and flat material.

9. Process according to claim 8, wherein said solid and flat material is a sheet or plate of wood or conglomerate wood.

10. Process according to claim 4, wherein said compressing by pressure is carried out by using rollers in order to remove or take out the air occluded during the application of the water base resin, curing agent and glass fibres.

11. Process according to claim 4, wherein said drying process is carried out with heated air at the drying temperature.

12. Themoplastic material product obtained with the reinforcement system according to any of claims 1 to 3.

13. Themoplastic material product obtained by the process according to any of claims 4-11.

14. Themoplastic material product according to claim 13, wherein said product is an acrylic sanitary product such as a bath, shower tray, shower panel or hydromassage column.
